# EUROPEAN PATENT SPECIFICATION

(11) **EP 2 782 206 B1**
(45) Date of publication and mention of the grant of the patent: **08.03.2017**
(21) Application number: 13160031.4
(22) Date of filing: 19.03.2013
(51) Int. Cl.: H02J 7/00, H01M 10/615, H01M 10/44, H01M 10/48, H01M 10/637

(54) **Battery control device**
Steuervorrichtung für Batterie
Dispositif de contrôle pour batterie

(43) Date of publication of application: 24.09.2014
(73) Proprietor: Kabushiki Kaisha Toshiba, Tokyo 105-8001 (JP)
(72) Inventor: Monden, Yukitaka, Minato-ku Tokyo 105-8001 (JP); Okita, Yuji, Minato-ku Tokyo 105-8001 (JP); Mizutani, Mami, Minato-ku Tokyo 105-8001 (JP); Amaki, Satoru, Minato-ku Tokyo 105-8001 (JP); Yamashita, Yuusuke, Minato-ku Tokyo 105-8001 (JP); Nishida, Susumu, Minato-ku Tokyo 105-8001 (JP)
(74) Representative: Moreland, David

(56) References cited:
- EP-A1- 2 290 731
- JP-A- 2008 236 991
- JP-A- 2010 093 871
- JP-A- 2010 093 883
- JP-A- 2010 093 969
- JP-A- 2011 076 927
- JP-A- 2011 109 802
- US-A1- 2012 262 109
- US-A1- 2012 306 432

## Description

### FIELD

Embodiments described herein relate generally to a rechargeable battery control apparatus for raising the temperature of a rechargeable battery within a short time period.

### BACKGROUND

In rechargeable battery charging and discharging operations, the impedance of the rechargeable battery increases in a low-temperature environment, so electric power or an energy amount that can be charged and discharged at normal temperature cannot be obtained in a low-temperature environment. To solve this problem, a method of raising the temperature of a rechargeable battery by using a heater installed outside the battery is adopted. However, the heater produces a power loss, and it is impossible to evenly raise the temperature within a short time outside and inside the rechargeable battery.

As a method applicable to the case where the temperature of the rechargeable battery is lower than a predetermined value, a method for raising the temperature of the rechargeable battery by repeated charging/discharging operations is proposed. The method charges power by an electric generator and discharges it to an inverter load. (Refer to Patent Literature 1, for example). Also proposed is a method wherein the charging/discharging of the rechargeable battery is repeatedly executed between a rechargeable battery and a DC capacitor. (Refer to Patent Literature 2, for example.)

### Prior Art Documents

### Patent Literature

Patent Literature 1 Jpn. Pat. Appln. KOKAI Publication No. 2003-272712
Patent Literature 2 Jpn. Pat. Appln. KOKAI Publication No. 2007-12568

JP2011076927 discloses a battery for electric vehicles.

### SUMMARY OF THE INVENTION

### Object of the Invention

A high-performance rechargeable battery (especially a lithium-ion rechargeable battery) has a low internal resistance. Therefore, in order to rapidly raise the temperature of the rechargeable battery in a low-temperature environment, large-current charging/discharging has to be forcibly executed for the rechargeable battery. To enable this, energy used for charging the rechargeable battery has to be ensured, and an energy-consuming element for which a discharge operation of the second battery is performed has to be taken into account.

In the prior art of patent literature 1, a commercial power supply and an engine are used as energy sources by which the second battery is charged, and a load and a motor are used as power-consuming units for which the discharge operation of the rechargeable battery is performed. In this method, however, the energy is not utilized during the discharging operation of the rechargeable battery, and a power loss inevitably occurs in a heater as well. In the prior art method of patent literature 2 wherein the energy generated by the charging/discharging of the rechargeable battery is supplied to a capacitor, the capacitor must have a considerably-increased capacity for the large-current charging/discharging required for rapidly raising the temperature of the battery. Such a capacitor has problems in terms of the volume and cost.

An object of the present embodiment is to provide a rechargeable battery controller applicable to an electric storage device which comprises a plurality of rechargeable batteries, and which is capable of eliminating a power loss other than that required for raising the temperature of a battery and of rapidly raising the temperature of the rechargeable batteries.

### Means for Achieving the Object

This object is achieved by providing a battery control apparatus according to claim 1. Embodiments of the invention are specified in the dependent claims.

### BRIEF DESCRIPTION OF THE DRAWINGS

FIG. 1 is a view showing the arrangement of a rechargeable battery control apparatus according to the first embodiment;
FIG. 2 is a view showing a configuration example of a charge/discharge controller;
FIG. 3 is a view showing a heat-up operation pattern of the charge/discharge controller;
FIG. 4 is a view showing the arrangement of a rechargeable battery control apparatus according to the second embodiment;
FIG. 5 is a view showing the arrangement of a rechargeable battery control apparatus according to the third embodiment;
FIG. 6 is a view showing the arrangement of a rechargeable battery control apparatus according to the fourth embodiment;
FIG. 7 is a view showing an example of the control of a charge/discharge controller;
FIG. 8 is a view showing an example of the control of a charge/discharge controller according to the fifth embodiment;
FIG. 9 is a view showing an example of the control of a charge/discharge controller according to the sixth embodiment;
FIG. 10 is a view showing an example of the control of a charge/discharge controller according to the seventh embodiment;
FIG. 11 is a view showing an example of the control of a charge/discharge controller according to the eighth embodiment; and
FIG. 12 is a view showing an example of the control of a charge/discharge controller according to the ninth embodiment.

### DETAILED DESCRIPTION

The rechargeable battery control apparatus according to this embodiment will be explained below with reference to the accompanying drawings.

### (First Embodiment)

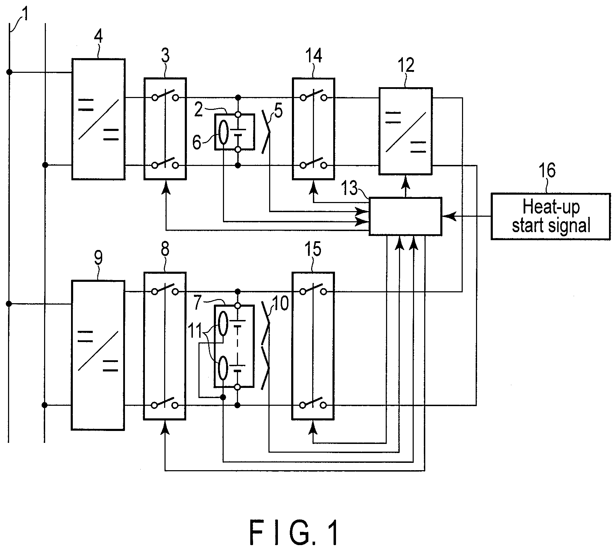

FIG. 1 is a view showing the arrangement of a rechargeable battery control apparatus according to the first embodiment. Referring to FIG. 1, this apparatus includes a DC bus 1, a rechargeable battery 2, a switching unit 3, a DC/DC converter 4 for performing charging/discharging of electric power of the rechargeable battery 2 with respect to the DC bus 1, a voltage detector 5 for detecting the voltages of the rechargeable battery 2 and one or more cells of the rechargeable battery 2, a battery temperature detector 6 for detecting the temperature of the rechargeable battery 2, at least one rechargeable battery 7 different from the rechargeable battery 2, a switching unit 8, a DC/DC converter 9 for performing charging/discharging of electric power of the rechargeable battery 7 with respect to the DC bus 1, a voltage detector 10 for detecting the voltages of the rechargeable battery 7 and one or more cells of the rechargeable battery 7, a battery temperature detector 11 for detecting the temperature of the rechargeable battery 7, a charger/discharger 12 for performing charging/discharging between the rechargeable batteries 2 and 7, a charge/discharge controller 13 for controlling the charger/discharger 12, the switching units 3 and 8, and switching units 14 and 15, the switching unit 14 for disconnecting the charger/discharger 12 from the rechargeable battery 2, the switching unit 15 for disconnecting the charger/discharger 12 from the rechargeable battery 7, and a heat-up start signal 16.

The rechargeable battery 2 is connected to the DC bus 1 via the switching unit 3 and DC/DC converter 4. In a normal battery use, the switching unit 3 is turned on, and the DC/DC converter 4 controls charging and discharging of the rechargeable battery 2. Similarly, the rechargeable battery 7 is connected to the DC bus 1 via the switching unit 8 and DC/DC converter 9. In a normal battery use, the switching unit 8 is turned on, and the DC/DC converter 9 controls charging and discharging of the rechargeable battery 7.

The charger/discharger 12 is connected to the rechargeable battery 2 via the switching unit 14, and connected to the rechargeable battery 7 via the switching unit 15. The charge/discharge controller 13 for controlling the charger/discharger 12 receives voltage information of the rechargeable battery 2 which is detected by the voltage detector 5 and battery temperature information detected by the battery temperature detector 6, and also receives voltage information of the rechargeable battery 7 which is detected by the voltage detector 10 and battery temperature information detected by the battery temperature detector 11.

When the heat-up start signal 16 is input to the charge/discharge controller 13, the charge/discharge controller 13 compares the battery temperature information detected by the battery temperature detector 6 and the battery temperature information detected by the battery temperature detector 11 with a preset low threshold temperature. If the battery temperature information is lower than the low threshold temperature, the charge/discharge controller 13 turns off the switching units 3 and 8 and turns on the switching units 14 and 15, thereby disconnecting the rechargeable batteries 2 and 7 from the DC bus 1 and connecting them to the charger/discharger 12.

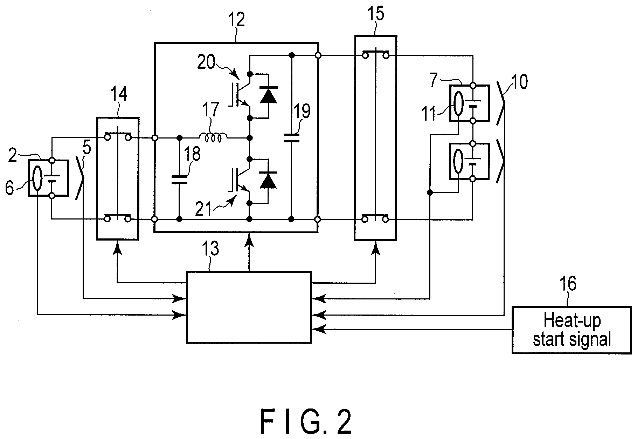

FIG. 2 shows an example of the circuit configuration of the charger/discharger 12. The charger/discharger 12 includes a reactor 17, capacitors 18 and 19, and semiconductor elements 20 and 21. The same reference numerals as in FIG. 1 denote the same parts in FIG. 2, and a repetitive explanation will be omitted.

When viewed from the rechargeable battery 2, the charger/discharger 12 includes the semiconductor element 20 for charging the rechargeable battery 2, and the semiconductor element 21 for discharging the rechargeable battery 2, and the reactor 17 has a function of storing energy generated by charging/discharging. Also, the capacitor 18 is connected to the rechargeable battery 2 side of the charger/discharger 12, and the capacitor 19 is connected to the rechargeable battery 7 side of the charger/discharger 12, thereby reducing current ripples produced in the rechargeable batteries 2 and 7. Note that when the capacitors 18 and 19 are used, an inrush current sometimes flows from the rechargeable battery to the capacitor when the switching unit 14 or 15 is turned on. If this inrush current is excessive, the switching unit or the like may be damaged. Therefore, the charger/discharger 12 may also include an inrush current preventing circuit that is a series circuit including a switching unit and resistor and formed in parallel to the switching units 14 and 15. In this mechanism, the capacitors 18 and 19 are precharged by turning on the inrush current preventing circuit before the switching units 14 and 15 are turned on, and then the switching units 14 and 15 are turned on.

The charge/discharge controller 13 generates a charge/discharge control signal based on the heat-up start signal 16 and the battery temperature information detected by the battery temperature detectors 6 and 11, and outputs the charge/discharge control signal to the charger/discharger 12. In accordance with this charge/discharge control signal from the charge/discharge controller 13, the charger/discharger 12 turns on and off the semiconductor element 20 to charge the rechargeable battery 2 and discharge the rechargeable battery 7, thereby exchanging electric power. Also, the charger/discharger 12 turns on and off the semiconductor element 21 to discharge the rechargeable battery 2 and charge the rechargeable battery 7, thereby exchanging electric power. If the rechargeable battery 2 is continuously charged or discharged, the electric power of the rechargeable battery reaches the upper or lower limit voltage of the battery soon, and the battery cannot be charged or discharged any more. Therefore, the charge/discharge controller 13 receives the voltage information detected by the voltage detector 5 and the voltage information detected by the voltage detector 10, stops charging and switches to discharging or pause if these pieces of voltage information reach the upper limit voltage of the rechargeable battery 2 or 7, and stops discharging and switches to charging or pause if these pieces of voltage information reach the lower limit voltage of the rechargeable battery 2 or 7.

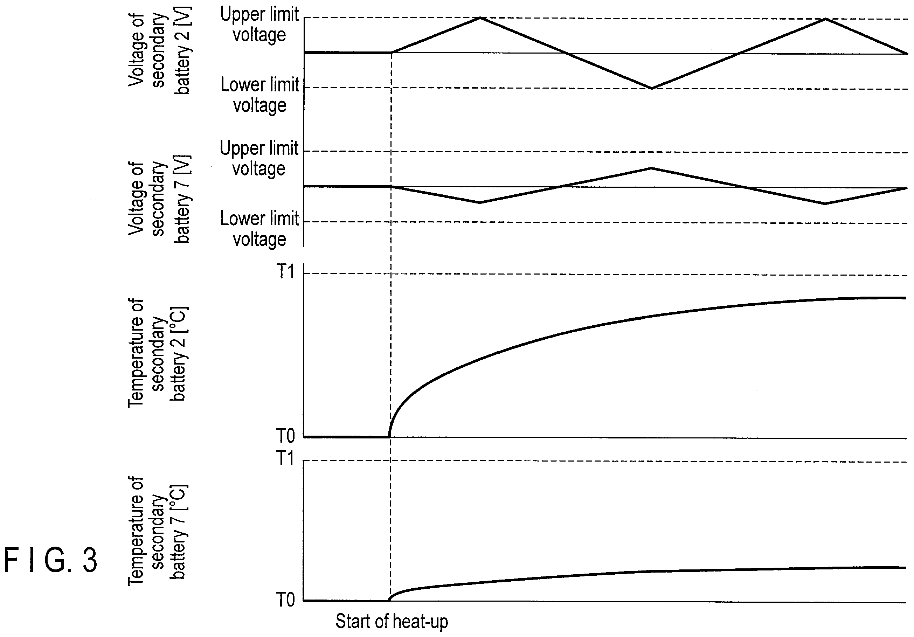

FIG. 3 shows an example of a heat-up operation pattern of the charge/discharge controller 13. When receiving the heat-up start signal, the charge/discharge controller 13 starts a heat-up operation if a temperature T0 of the rechargeable batteries 2 and 7 is lower than a low threshold temperature. For example, the charge/discharge controller 13 first starts charging the rechargeable battery 2 and discharging the rechargeable battery 7. When the voltage information detected by the voltage detector 5 reaches the upper limit voltage or the voltage information detected by the voltage detector 10 reaches the lower limit voltage, the charge/discharge controller 13 switches to discharging of the rechargeable battery 2 and charging of the rechargeable battery 7. When the voltage information detected by the voltage detector 5 reaches the lower limit voltage or the voltage information detected by the voltage detector 10 reaches the higher limit voltage after that, the charge/discharge controller 13 switches to charging of the rechargeable battery 2 and discharging of the rechargeable battery 7 again. When the rechargeable battery 2 or 7 reaches a target temperature T1, the charge/discharge controller 13 stops the heat-up operation.

In the first embodiment as described above, if the impedance of a rechargeable battery rises in a low-temperature environment, a large current is charged and discharged between this rechargeable battery and another rechargeable battery. This makes it possible to raise the temperature of the battery within a short time period without any power loss. Consequently, it is possible to reduce the impedance of the rechargeable battery, and improve the output power and energy amount.

### (Second Embodiment)

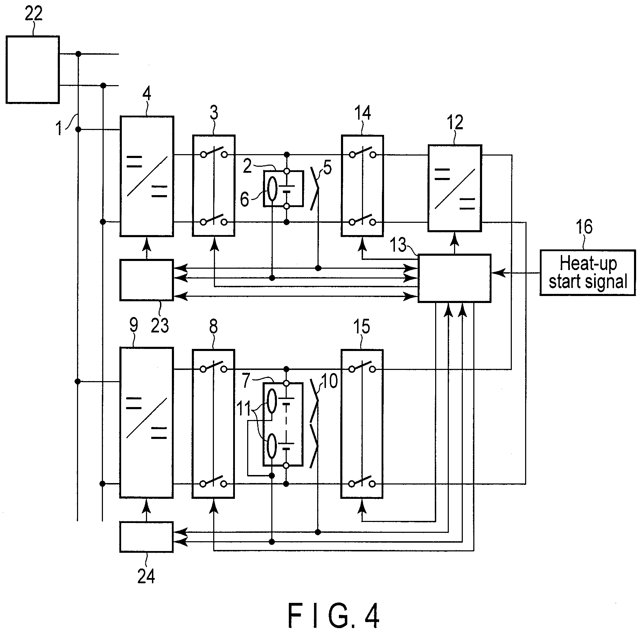

FIG. 4 is a view showing the arrangement of a rechargeable battery control apparatus according to the second embodiment. The second embodiment is obtained by further adding a power supply unit 22, a controller 23 for controlling a DC/DC converter 4, and a controller 24 for controlling a DC/DC converter 9 to the arrangement shown in FIG. 1. Note that the power supply unit 22 can be a commercial power supply or dispersed power supply, and can also be a generator. The same reference numerals as in FIG. 1 denote the same parts in FIG. 4, and a repetitive explanation will be omitted.

The power supply unit 22 is connected to a rechargeable battery 2 via the DC/DC converter 4. Under the control of the controller 23, the power supply unit 22 can drive the DC/DC converter 4 and move electric power generated by the power supply unit 22 to the rechargeable battery 2, thereby charging it. Similarly, the power supply unit 22 is connected to a rechargeable battery 7 via the DC/DC converter 9, and, under the control of the controller 24, can drive the DC/DC converter 9 and move electric power generated by the power supply unit 22 to the rechargeable battery 7, thereby charging it.

The controller 23 for controlling the DC/DC converter 4 includes a state-of-charge determination unit for determining the state of charge of the rechargeable battery 2. The state-of-charge determination unit estimates the residual energy amount (SOC: State of Charge) of the rechargeable battery 2 from voltage information detected by a voltage detector 5 of the rechargeable battery 2 and battery temperature information detected by a battery temperature detector 6, and generates state-of-charge information. This state-of-charge information generated by the controller 23 is transmitted to a charge/discharge controller 13. If the state-of-charge information is lower than a preset threshold, the charge/discharge controller 13 drives the DC/DC converter 4 by the controller 23 to move electric power generated by the power supply unit 22 to the rechargeable battery 2, thereby charging it.

The controller 24 for controlling the DC/DC converter 9 includes a state-of-charge determination unit for determining the state of charge of the rechargeable battery 7. The state-of-charge determination unit estimates the residual energy amount (SOC) of the rechargeable battery 7 from voltage information detected by a voltage detector 10 of the rechargeable battery 7 and battery temperature information detected by a battery temperature detector 11, and generates state-of-charge information. If this state-of-charge information transmitted from the controller 24 is lower than a preset threshold, the charge/discharge controller 13 drives the DC/DC converter 9 to move electric power generated by the power supply unit 22 to the rechargeable battery 7, thereby charging it.

In the second embodiment as described above, when raising the temperatures of the rechargeable batteries 2 and 7 by performing charging/discharging between them by using a charger/discharger 12, if the energies of the rechargeable batteries 2 and 7 are low, it is possible to store energy sufficient for a discharging operation by precharging the rechargeable batteries.

### (Third Embodiment)

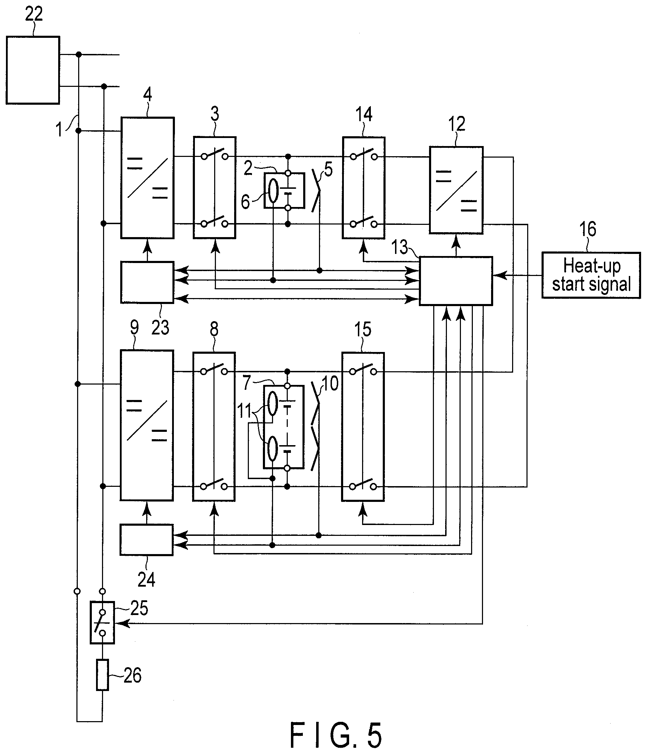

FIG. 5 is a view showing the arrangement of a rechargeable battery control apparatus according to the third embodiment. In the third embodiment, a switching unit 25 and power consuming unit 26 are added to the arrangement shown in FIG. 4. The power consuming unit 26 can also be a loading device such as resistor or motor. The same reference numerals as in FIG. 4 denote the same parts in FIG. 5, and a repetitive explanation will be omitted.

The power consuming unit 26 is connected to a DC bus 1 via the switching unit 25. A controller 23 for controlling a DC/DC converter 4 includes a state-of-charge determination unit for determining the state of charge of a rechargeable battery 2. The state-of-charge determination unit estimates the residual energy amount (SOC) of the rechargeable battery 2 from voltage information detected by a voltage detector 5 of the rechargeable battery 2 and battery temperature information detected by a battery temperature detector 6, and generates state-of-charge information. If this state-of-charge information transmitted from the controller 23 is higher than a preset threshold, a charge/discharge controller 13 turns on the switching unit 25 to connect the power consuming unit 26 to the DC bus 1, thereby securing a power consumption destination. In addition, the charge/discharge controller 13 drives the DC/DC converter 4 by the controller 23 and performs discharging so that the power consuming unit 26 consumes electric power of the rechargeable battery 2.

Also, a controller 24 for controlling a DC/DC converter 9 includes a state-of-charge determination unit for determining the state of charge of a rechargeable battery 7. The state-of-charge determination unit estimates the residual energy amount (SOC) of the rechargeable battery 7 from voltage information detected by a voltage detector 10 of the rechargeable battery 7 and battery temperature information detected by a battery temperature detector 11, and generates state-of-charge information. If this state-of-charge information transmitted from the controller 24 is higher than a preset threshold, the charge/discharge controller 13 turns on the switching unit 25 to connect the power consuming unit 26 to the DC bus 1, thereby securing a power consumption destination. In addition, the charge/discharge controller 13 drives the DC/DC converter 9 by the controller 24 and performs discharging so that the power consuming unit 26 consumes electric power of the rechargeable battery 7.

In the third embodiment as described above, when raising the temperatures of the rechargeable batteries 2 and 7 by performing charging/discharging between them by using a charger/discharger 12, if the energies of the rechargeable batteries 2 and 7 are high, it is possible to discharge the rechargeable batteries beforehand to give them a margin to store energy with respect to a charging operation.

### (Fourth Embodiment)

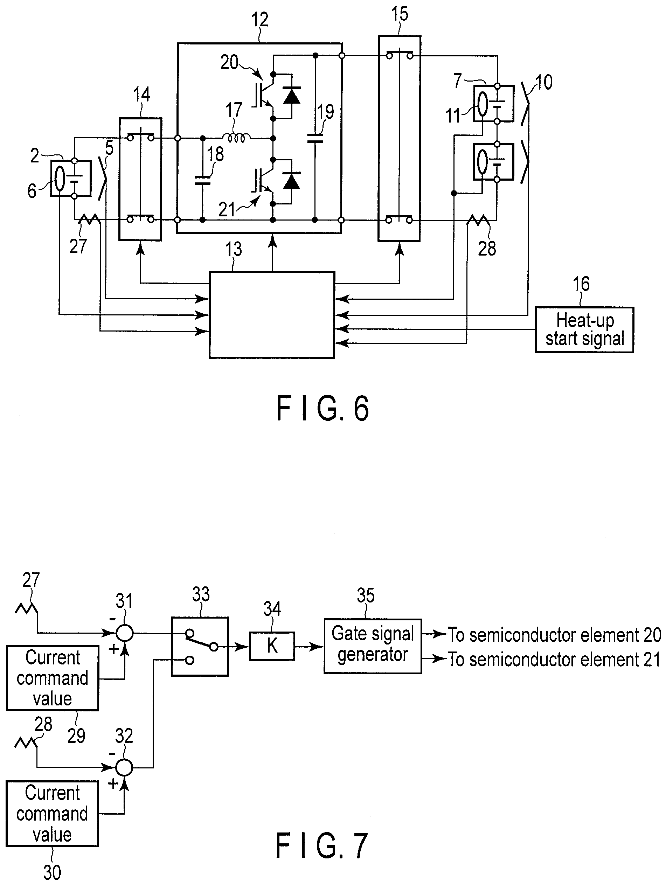

FIG. 6 is a view showing the arrangement of a rechargeable battery control apparatus according to the fourth embodiment. The fourth embodiment is obtained by adding a current detector 27 for measuring the charge/discharge current of a rechargeable battery 2 and a current detector 28 for measuring the charge/discharge current of a rechargeable battery 7 to the arrangement shown in FIG. 2. FIG. 7 is a view showing an example of the control of a charge/discharge controller 13 in the arrangement shown in FIG. 6. As shown in FIG. 7, the charge/discharge controller 13 includes a current command value 29 for controlling the charge/discharge current of the rechargeable battery 2, a current command value 30 for controlling the charge/discharge current of the rechargeable battery 7, adders 31 and 32, a switching unit 33 for switching pieces of current information to be controlled, a control gain 34, and a gate signal generator 35 for generating gate signals for turning on and off semiconductor elements 20 and 21. Note that the current command values 29 and 30 are preset in the fourth embodiment.

The operation of the fourth embodiment will be explained with reference to FIGS. 6 and 7. The current detector 27 measures the charge/discharge current of the rechargeable battery 2, and outputs current information to the adder 31. The adder 31 receives the current command value 29 for controlling the charge/discharge current of the rechargeable battery 2 and the current information detected by the current detector 27, and obtains a deviation between them. Also, the current detector 28 measures the charge/discharge current of the rechargeable battery 7, and outputs current information to the adder 32. The adder 32 receives the current command value 30 for controlling the charge/discharge current of the rechargeable battery 7 and the current information detected by the current detector 28, and obtains a deviation between them.

The switching unit 33 performs switching in accordance with a rechargeable battery to be controlled by a charger/discharger 12, and outputs, to the control gain 34, current deviation information obtained from the current information and current command value of the rechargeable battery to be controlled. The current deviation information is gained by the control gain 34, and supplied to the gate signal generator 35. The gate signal generator 35 generates signals for driving the semiconductor elements 20 and 21, and outputs the signals to the semiconductor elements 20 and 21.

That is, in the fourth embodiment, the deviation between the current information detected by the current detector 27 and the preset current command value is obtained, and charging and discharging are controlled based on this deviation such that the charge/discharge current matches the current command value. In the fourth embodiment as described above, charging or discharging for heat-up can be performed by controlling the charge/discharge current of a rechargeable battery. This makes it possible to avoid the generation of an overcurrent to the rechargeable battery, and perform charging/discharging with a large current.

### (Fifth Embodiment)

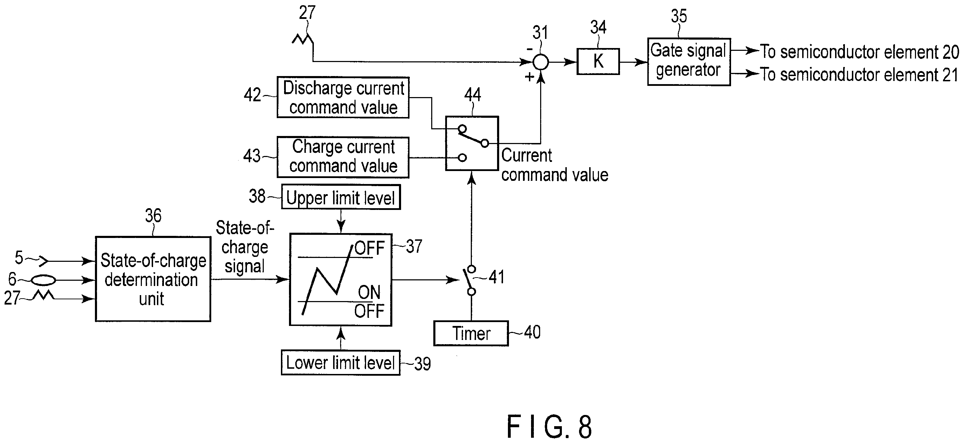

The fifth embodiment has the same arrangement as that shown in FIG. 6 of the abovementioned fourth embodiment, except for the control of a charge/discharge controller 13. FIG. 8 shows an example of the control of the charge/discharge controller 13 according to the fifth embodiment. As shown in FIG. 8, the charge/discharge controller 13 includes an adder 31, a control gain 34, a gate signal generator 35 for generating gate signals for turning on and off semiconductor elements 20 and 21, a state-of-charge determination unit 36, a level determination unit 37, an upper limit level 38, a lower limit level 39, a timer 40, a switching unit 41 for turning on and off the timer 40, a discharge current command value 42, a charge current command value 43, and a switching unit 44.

When a rechargeable battery 2 is selected as a battery to be heated in FIG. 8, the state-of-charge determination unit 36 receives voltage information from a voltage detector 5, battery temperature information detected by a battery temperature detector 6, and current information detected by a current detector 27, determines the state of charge of the rechargeable battery 2, and inputs state-of-charge information to the level determination unit 37. The level determination unit 37 compares the state-of-charge information with the preset upper limit level 38 and lower limit level 39. If the state-of-charge information is lower than the upper limit level 38 and higher than the lower limit level 39, the level determination unit 37 turns on the switching unit 41 to turn on the output from the timer 40. On the other hand, if the state-of-charge information is higher than the upper limit level 38 or lower than the lower limit level 39, the level determination unit 37 turns off the switching unit 41 to turn off the output from the timer 40.

The switching unit 44 receives the discharge current command value 42 and charge current command value 43. When the signal from the timer 40 is turned on by the switching unit 41, the switching unit 44 switches signals in accordance with the timer output so as to alternately output the discharge current command value 42 and charge current command value 43 for every predetermined time. The adder 31 obtains a deviation between current information detected by the current detector 27 and the current command value, and outputs current deviation information. This current deviation information is gained by the control gain 34, and supplied to the gate signal generator 35. The gate signal generator 35 generates signals for driving the semiconductor elements 20 and 21, and outputs the signals to the semiconductor elements 20 and 21.

In the fifth embodiment as described above, when the state of charge (SOC) of a rechargeable battery to be heated is, e.g., 40% which is between 80% as an upper limit level of the SOC and 20% as a lower limit level of the SOC, the rechargeable battery is charged and discharged by alternately outputting the discharge current command value 42 (e.g., 10 A) and the charge current command value 43 (e.g., 10 A) for, e.g., every 10 sec. This makes it possible to simply heat the rechargeable battery by charging and discharging it without any particularly complicated charge/discharge control.

### (Sixth Embodiment)

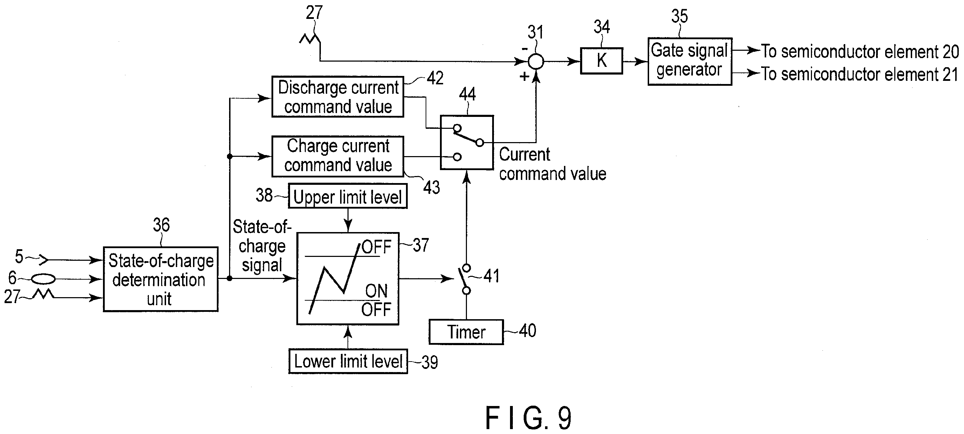

FIG. 9 shows an example of the control of a charge/discharge controller 13 according to the sixth embodiment. As shown in FIG. 9, the sixth embodiment is obtained by changing the abovementioned fifth embodiment such that a discharge current command value 42 and charge current command value 43 receive state-of-charge information determined by a state-of-charge determination unit 36, and the discharge current command value 42 and charge current command value 43 are changed in accordance with the state-of-charge information.

In the sixth embodiment as described above, when the state-of-charge (SOC) of a rechargeable battery to be heated is, e.g., 30% which is between 80% as an upper limit level of the SCO and 20% as a lower limit level of the SOC, a discharge margin is 10% (= state of charge: 30% - lower limit level: 20%). Therefore, the discharge current command value 42 (e.g., 5 A) and the charge current command value 43 (e.g., 10 A) are alternately output for every 10 sec for a given period, thereby making the state of charge close to 50%. When the state of charge of the rechargeable battery becomes close to 50% to some extent, the discharge current command value 42 (e.g., 10 A) and the charge current command value 43 (e.g., 10 A) are alternately output for every 10 sec, thereby charging and discharging the rechargeable battery. This makes it possible to rapidly heat the rechargeable battery by simply charging and discharging it without any particularly complicated charge/discharge control.

### (Seventh Embodiment)

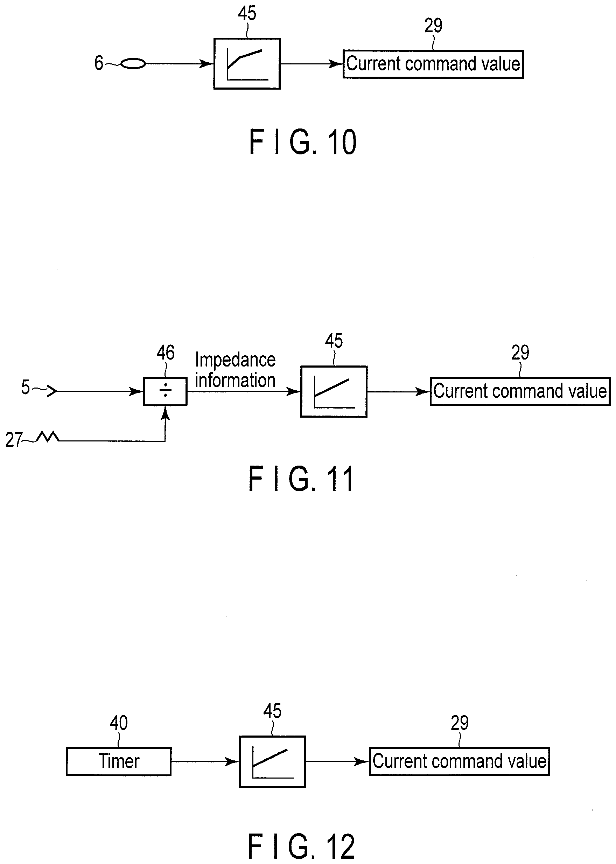

FIG. 10 shows an example of the control of a charge/discharge controller 13 according to the seventh embodiment. The seventh embodiment is obtained by adding a data converter 45 to FIG. 7.

Referring to FIG. 10, when a rechargeable battery 2 is selected as a battery to be charged/discharged for heat-up, the data converter 45 receives battery temperature information from a battery temperature detector 6, and generates a current command value 29 from the battery temperature information.

In the seventh embodiment as described above, a charge/discharge current can be increased as a rechargeable battery heats up and the impedance reduces. This makes it possible to shorten the charge/discharge time by optimizing the charge/discharge current.

### (Eighth Embodiment)

FIG. 11 shows an example of the control of a charge/discharge controller 13 according to the eighth embodiment. The eighth embodiment is obtained by adding a data converter 45 and divider 46 to FIG. 7.

Referring to FIG. 11, when a rechargeable battery 2 is selected as a battery to be charged/discharged for heat-up, the divider 46 receives voltage information from a voltage detector 5 and current information from a current detector 27, and calculates the impedance value by dividing the voltage value by the current value. The data converter 45 receives this impedance value and generates a current command value 29 suited to the impedance value.

In the eighth embodiment as described above, a charge/discharge current suitable for the battery impedance that reduces as the battery temperature rises can be set as a current command value. This makes it possible to reduce the charge/discharge time.

### (Ninth Embodiment)

FIG. 12 shows an example of the control of a charge/discharge controller 13 according to the ninth embodiment. The ninth embodiment is obtained by adding a timer 40 and data converter 45 to FIG. 7.

The data converter 45 receives time information of the timer 40 that starts at the beginning of a charge/discharge operation, and performs control so as to gradually increase a current command value 29 as the time elapses.

In the ninth embodiment as described above, the current command value can be generated by using only the elapsed time as a criterion of current generation without detecting the voltage and electric current. Accordingly, the current command value can be increased with a simple arrangement.

Although several embodiments of the present invention have been explained, these embodiments are presented as examples, and are not intended to limit the scope of the invention. These novel embodiments can be practiced in a variety of other forms, and various omissions, replacements, and changes can be made without departing from the scope of the invention. These embodiments and their modifications are included in the scope of the invention, and are also included within the range of inventions and their equivalents described in the scope of claims.

### Explanation of Reference Symbols

1...DC bus, 2...rechargeable battery, 3...switching unit, 4...DC/DC converter, 5...voltage detector, 6...battery temperature detector, 7...rechargeable battery, 8...switching unit, 9...DC/DC converter, 10...voltage detector, 11...battery temperature detector, 12...charger/discharger, 13...charger/discharger controller, 14...switching unit, 15...switching unit, 16...heat-up start signal, 17...reactor, 18...capacitor, 19...capacitor, 20...semiconductor element, 21...semiconductor element, 22...power supply unit, 23...controller (state-of-charge determination unit), 24...controller (state-of-charge determination unit), 25...switching unit, 26...power-consuming unit, 27...current detector, 28...current detector, 29...current command value, 30...current command value, 31...adder, 32...adder, 33...switching unit, 34...control gain, 35...gate signal generator, 36... state-of-charge determination unit, 37...level determination unit, 38...upper limit level, 39...lower limit level, 40...timer, 41...switching unit, 42...discharge current command value, 43...charge current command value, 44...switching unit, 45...data converter, 46...divider

## Claims

1. A battery control apparatus for controlling first and second rechargeable batteries (2, 7) connected to a common bus, the apparatus comprising:
a voltage detector (5, 10) configured to detect voltages of the first and second rechargeable batteries (2, 7);
a temperature detector (6, 11) configured to detect a temperature of the first and second rechargeable batteries (2,7);
a charger/discharger (12) configured to connect the rechargeable batteries (2,7), and charge one rechargeable battery by electric power discharged by another rechargeable battery; and
a controller (13) configured to control the charger/discharger (12) such that charging and discharging are performed between the rechargeable batteries (2,7) by using the charger/discharger (12) if battery temperature information detected by the temperature detector (6,11) is lower than a preset threshold temperature, wherein the charging is stopped and switched to discharging or pause if voltage information detected by the voltage detector (5,10) reaches an upper limit voltage of the rechargeable battery, and the discharging is stopped and switched to charging or pause if the voltage information detected by the voltage detector (5,10) reaches a lower limit voltage of the rechargeable battery.

2. The apparatus according to claim 1, **characterized by** further comprising:
a power supply unit (22) configured to supply electric power to the first rechargeable battery (2) and the second rechargeable battery (7) via the bus (1); and
a state-of-charge determination unit (23) configured to determine a state of charge of the first and second rechargeable batteries (2,7),
wherein if state-of-charge information determined by the state-of-charge determination unit (23) is lower than a preset voltage threshold, the controller (13) charges the first and second rechargeable batteries by supplying electric power from the power supply unit (22) to the first and second rechargeable batteries (2, 7).

3. The apparatus according to claim 1 or 2, **characterized by** further comprising:
a power consuming unit (26) configured to consume electric power of the first and second rechargeable batteries (2,7) via the bus (1); and
a state-of-charge determination unit (23) configured to determine a state of charge of the first and second rechargeable batteries (2,7),
wherein if state-of-charge information determined by the state-of-charge determination unit (23) is higher than a preset voltage threshold, the controller (13) discharges the first and second rechargeable batteries (2,7) by consuming electric power of the first and second rechargeable batteries (2,7) by the power consuming unit (26).

4. The apparatus according to one of claims 1 to 3, **characterized by** further comprising
a current detector (27, 28) configured to detect a charge/discharge current of the first and second rechargeable batteries, wherein
the controller (13) performs charging/discharging based on a deviation between current information detected by the current detector (27,28) and a preset current command value, such that the charge/discharge current matches the current command value.

5. The apparatus according to claim 4, **characterized by** further comprising a state-of-charge determination unit (36) configured to determine a state of charge of the first and second rechargeable batteries (2,7),
wherein if state-of-charge information determined by the state-of-charge determination unit (36) falls within a preset range, the controller (13) repeats charging and discharging of the first and second rechargeable batteries (2,7) alternately by switching the current command values for every predetermined time.

6. The apparatus according to claim 4 or 5, **characterized by** further comprising a state-of-charge determination unit (36) configured to determine a state of charge of the first and second rechargeable batteries (2,7),
wherein the controller (13) changes a magnitude of the current command value in accordance with state-of-charge information determined by the state-of-charge determination unit (36).

7. The apparatus according to claim 4 or 5, **characterized in that** the controller (13) changes the current command value based on battery temperature information detected by the temperature detector (6, 11).

8. The apparatus according to claim 4 or 5, **characterized in that** the controller (13) obtains impedance information by dividing voltage information detected by the voltage detector (5,10) during charging or discharging by current information detected by the current detector (27,28), and changes the current command value in accordance with the impedance information.

9. The apparatus according to claim 4 or 5, **characterized in that** the controller (13) increases the current command value in accordance with a time elapsed from start of a charge/discharge operation.

## Patentansprüche

1. Eine Batterie-Steuer-Vorrichtung zum Steuern einer ersten und zweiten wiederaufladbaren Batterie (2, 7), welche mit einem gemeinsamen Bus verbunden sind, wobei die Vorrichtung umfasst:
einen Spannungsdetektor (5, 10), welcher konfiguriert ist, um Spannungen der ersten und zweiten wiederaufladbaren Batterie (2, 7) zu detektieren;
einen Temperaturdetektor (6, 11), welcher konfiguriert ist, eine Temperatur der ersten und zweiten wiederaufladbaren Batterie (2, 7) zu detektieren;
ein Ladegerät/Entladegerät (12), welches konfiguriert ist, die wiederaufladbaren Batterien (2, 7) zu verbinden, und eine wiederaufladbare Batterie durch elektrische Energie aufzuladen, welche von einer anderen wiederaufladbaren Batterie abgegeben wird; und
ein Steuergerät (13), welches konfiguriert ist, das Ladegerät/Entladegerät (12) so zu steuern, dass Laden und Entladen zwischen den wiederaufladbaren Batterien (2, 7) durch Verwenden des Ladegeräts/Entladegeräts (12) durchgeführt wird, wenn eine Batterie-Temperatur-Information, welche durch den Temperaturdetektor (6, 11) detektiert wird, niedriger ist als eine voreingestellte Schwellenwerttemperatur, wobei das Laden gestoppt wird und zu Entladen oder Pause gewechselt wird, wenn eine Spannungsinformation, welche durch den Spannungsdetektor (5, 10) detektiert wird, eine obere Grenzspannung der wiederaufladbaren Batterie erreicht, und das Entladen gestoppt wird und zu Laden oder Pause gewechselt wird, wenn eine Spannungsinformation, welche durch den Spannungsdetektor (5, 10) detektiert wird, eine untere Grenzspannung der wiederaufladbaren Batterie erreicht.

2. Die Vorrichtung gemäß Anspruch 1, **dadurch gekennzeichnet, dass** sie darüber hinausgehend umfasst:
eine Energie-Versorgungs-Einheit (22), welche konfiguriert ist, elektrische Energie an die erste wiederaufladbare Batterie (2) und die zweite wiederaufladbare Batterie (7) über den Bus (1) zuzuführen; und
eine Ladungszustand-Bestimmungs-Einheit (23), welche konfiguriert ist, einen Ladungszustand der ersten und zweiten wiederaufladbaren Batterie (2, 7) zu bestimmen,
wobei, wenn eine Ladungzustand-Information, welche durch die Ladungszustand-Bestimmungs-Einheit (23) bestimmt wurde, niedriger ist als eine voreingestellte Schwellenwertspannung, das Steuergerät (13) die erste und zweite wiederaufladbare Batterie lädt, indem es elektrische Energie von der Energie-Versorgungs-Einheit (22) an die erste und zweite wiederaufladbare Batterie (2, 7) zuführt.

3. Die Vorrichtung gemäß Anspruch 1 oder 2, **dadurch gekennzeichnet, dass** sie darüber hinausgehend umfasst:
eine Energie-Verbrauchs-Einheit (26), welche konfiguriert ist, elektrische Energie der ersten und zweiten wiederaufladbaren Batterie (2, 7) über den Bus (1) zu verbrauchen; und
eine Ladungszustand-Bestimmungs-Einheit (23), welche konfiguriert ist, einen Ladungszustand der ersten und zweiten wiederaufladbaren Batterie (2, 7) zu bestimmen,
wobei, wenn eine Ladungszustand-Information, welche durch die Ladungszustand-Bestimmungs-Einheit (23) bestimmt wurde, höher ist als eine voreingestellte Schwellenwertspannung, das Steuergerät (13) die erste und zweite wiederaufladbare Batterie entlädt, indem es elektrische Energie der ersten und zweiten wiederaufladbaren Batterie (2, 7) durch die Energie-Verbrauchs-Einheit (26) verbraucht.

4. Die Vorrichtung gemäß einem der Ansprüche 1 bis 3, **dadurch gekennzeichnet, dass** sie darüber hinausgehend umfasst:
einen Stromdetektor (27, 28), welcher konfiguriert ist, einen Ladungs-/Entladungsstrom der ersten und zweiten wiederaufladbaren Batterie zu detektieren, wobei
das Steuergerät (13) ein Laden/Entladen auf Grundlage einer Abweichung zwischen Strominformationen, welche durch den Stromdetektor (27, 28) detektiert wurden, und einem vorgesetzten Strom-Anweisungswert durchführt, so dass der Ladungs-/Entladungsstrom dem Strom-Anweisungswert entspricht.

5. Die Vorrichtung gemäß Anspruch 4, **dadurch gekennzeichnet, dass** sie darüber hinausgehend eine Ladungszustand-Bestimmungs-Einheit (36) umfasst, welche konfiguriert ist, einen Ladungszustand der ersten und zweiten wiederaufladbaren Batterie (2, 7) zu bestimmen,
wobei, wenn eine Ladungszustand-Information, welche durch die Ladungszustand-Bestimmungs-Einheit (23) bestimmt wurde, in einen voreingestellten Bereich hineinfällt, das Steuergerät (13) Laden und Entladen der ersten und zweiten wiederaufladbaren Batterie abwechselnd wiederholt, indem es den Strom-Anweisungswert für eine jede vorherbestimmte Zeit wechselt.

6. Die Vorrichtung gemäß Anspruch 4 oder 5, **dadurch gekennzeichnet, dass** sie darüber hinausgehend eine Ladungszustand-Bestimmungs-Einheit (36) umfasst, welche konfiguriert ist, einen Ladungszustand der ersten und zweiten wiederaufladbaren Batterie (2, 7) zu bestimmen,
wobei das Steuergerät (13) eine Größe des Strom-Steuerwertes ändert, in Übereinstimmung mit Ladungszustand-Informationen, welche durch die Ladungszustand-Bestimmungs-Einheit (36) bestimmt werden.

7. Die Vorrichtung gemäß Anspruch 4 oder 5, **dadurch gekennzeichnet, dass** das Steuergerät (13) den Strom-Anweisungswert auf Grundlage von Batterie-Temperatur-Informationen, welche durch den Temperaturdetektor (6, 11) detektiert werden, ändert.

8. Die Vorrichtung gemäß Anspruch 4 oder 5, **dadurch gekennzeichnet, dass** das Steuergerät (13) Impedanzinformationen durch Teilen von Spannungsinformationen, welche durch den Spannungsdetektor (5, 10) während eines Ladens oder Entladens detektiert werden, durch Strominformationen, welche durch den Stromdetektor (27, 28) detektiert werden, erhält, und den Strom-Anweisungswert in Übereinstimmung mit den Impedanzinformationen ändert.

9. Die Vorrichtung gemäß Anspruch 4 oder 5, **dadurch gekennzeichnet, dass** das Steuergerät (13) den Strom-Anweisungswert erhöht, in Übereinstimmung mit einer Zeit, welche seit einem Start einer Lade-/Entladeoperation verstrichen ist.

## Revendications

1. Appareil de commande de batterie pour commander des première et deuxième batteries rechargeables (2, 7) connectées à un bus commun, l'appareil comprenant :
un détecteur de tension (5, 10) configuré pour détecter les tensions des première et deuxième batteries rechargeables (2, 7) ;
un détecteur de température (6, 11) configuré pour détecter une température des première et deuxième batteries rechargeables (2, 7) ;
un chargeur/déchargeur (12) configuré pour connecter les batteries rechargeables (2, 7), et charger une batterie rechargeable par la puissance électrique déchargée par une autre batterie rechargeable ; et
un contrôleur (13) configuré pour commander le chargeur/déchargeur (12) de sorte qu'une charge et une décharge soient effectuées entre les batteries rechargeables (2, 7) en utilisant le chargeur/déchargeur (12) si les informations de température de batterie détectées par le détecteur de température (6, 11) sont inférieures à une température de seuil présélectionnée, dans lequel la charge est arrêtée et commutée vers une décharge ou une pause si les informations de tension détectées par le détecteur de tension (5, 10) atteignent une tension de limite supérieure de la batterie rechargeable, et la décharge est arrêtée et commutée vers une charge ou une pause si les informations de tension détectées par le détecteur de tension (5, 10) atteignent une tension de limite inférieure de la batterie rechargeable.

2. Appareil selon la revendication 1, **caractérisé en ce qu'**il comprend en outre :
une unité d'alimentation (22) configurée pour fournir la puissance électrique à la première batterie rechargeable (2) et à la deuxième batterie rechargeable (7) par l'intermédiaire du bus (1) ; et
une unité de détermination d'état de charge (23) configurée pour déterminer un état de charge des première et deuxième batteries rechargeables (2, 7),
dans lequel, si les informations d'état de charge déterminées par l'unité de détermination d'état de charge (23) sont inférieures à un seuil de tension présélectionné, le contrôleur (13) charge les première et deuxième batteries rechargeables en fournissant la puissance électrique de l'unité d'alimentation (22) aux première et deuxième batteries rechargeables (2, 7).

3. Appareil selon la revendication 1 ou 2, **caractérisé en ce qu'**il comprend en outre :
une unité consommant une puissance (26) configurée pour consommer la puissance électrique des première et deuxième batteries rechargeables (2, 7) par l'intermédiaire du bus (1) ; et
une unité de détermination d'état de charge (23) configurée pour déterminer un état de charge des première et deuxième batteries rechargeables (2, 7),
dans lequel, si les informations d'état de charge déterminées par l'unité de détermination d'état de charge (23) sont supérieures à un seuil de tension présélectionné, le contrôleur (13) décharge les première et deuxième batteries rechargeables (2, 7) par la consommation de la puissance électrique des première et deuxième batteries rechargeables (2, 7) par l'unité consommant une puissance (26).

4. Appareil selon l'une des revendications 1 à 3, **caractérisé en ce qu'**il comprend en outre :
un détecteur de courant (27, 28) configuré pour détecter un courant de charge/décharge des première et deuxième batteries rechargeables, dans lequel
le contrôleur (13) effectue une charge/décharge sur la base d'un écart entre les informations de courant détectées par le détecteur de courant (27, 28) et une valeur de commande de courant présélectionnée, de sorte que le courant de charge/décharge corresponde à la valeur de commande de courant.

5. Appareil selon la revendication 4, **caractérisé en ce qu'**il comprend en outre une unité de détermination d'état de charge (36) configurée pour déterminer un état de charge des première et deuxième batteries rechargeables (2, 7),
dans lequel, si les informations d'état de charge déterminées par l'unité de détermination d'état de charge (36) tombent dans une plage prédéterminée, le contrôleur (13) répète la charge et la décharge des première et deuxième batteries rechargeables (2, 7) alternativement en commutant les valeurs de commande de courant tous les instants prédéterminés.

6. Appareil selon la revendication 4 ou 5, **caractérisé en ce qu'**il comprend en outre une unité de détermination d'état de charge (36) configurée pour déterminer un état de charge des première et deuxième batteries rechargeables (2, 7),
dans lequel le contrôleur (13) change une amplitude de la valeur de commande de courant conformément aux informations d'état de charge déterminées par l'unité de détermination d'état de charge (36).

7. Appareil selon la revendication 4 ou 5, **caractérisé en ce que** le contrôleur (13) change la valeur de commande de courant sur la base des informations de température de batterie détectées par le détecteur de température (6, 11).

8. Appareil selon la revendication 4 ou 5, **caractérisé en ce que** le contrôleur (13) obtient des informations d'impédance en divisant les informations de tension détectées par le détecteur de tension (5, 10) pendant la charge ou la décharge par les informations de courant détectées par le détecteur de courant (27, 28), et change la valeur de commande de courant conformément aux informations d'impédance.

9. Appareil selon la revendication 4 ou 5, **caractérisé en ce que** le contrôleur (13) augmente la valeur de commande de courant conformément à un temps écoulé depuis le début d'une opération de charge/décharge.
